Europäisches Patentamt

European Patent Office

Office européen des brevets

(19)

(11) Publication number : **0 478 187 A2**

(12) **EUROPEAN PATENT APPLICATION**

(21) Application number : **91308388.7**

(22) Date of filing : **13.09.91**

(51) Int. Cl.⁵ : **G03B 21/62**

(30) Priority : **22.09.90 GB 9020705**

(43) Date of publication of application :
**01.04.92 Bulletin 92/14**

(84) Designated Contracting States :
**AT BE CH DE DK ES FR GB GR IT LI LU NL SE**

(71) Applicant : **THORN EMI plc**
**4 Tenterden Street**
**London W1A 2AY (GB)**

(72) Inventor : **Sibbald, Alastair**
**18 Horseguards Drive**
**Maidenhead, Berkshire SL6 1XL (GB)**

(74) Representative : **Hurst, Richard Arthur**
**Alexander et al**
**THORN EMI Patents Limited, Central**
**Research Laboratories, Dawley Road**
**Hayes, Middlesex UB3 1HH (GB)**

(54) **Imaging system.**

(57) A system for displaying an image (6) includes a transparent image supporting sheet (2) including fluorescent material. An optical image (6) to be displayed is projected onto the image supporting sheet (2), causing a fluorescent image to be generated.
The fluorescent image has high intrinsic definition, can be viewed from both sides of the sheet (2) and a wide range of angles.

## Fig.1

The present invention relates to an optical imaging system and has particular, though not exclusive, relevance to a projection system such as may be used for advertising purposes and the like.

Conventional imaging systems include projection screens, the commonest of which are made so as to diffusely reflect the light impinging thereon. Examples of such screens are white paint, finely ground glass or finely ground $TiO_2$. The light reflected by such screens is largely reflected back towards the source and the screen is usually normal to the direction of projection of the light impinging on the screen.

Three-dimensional surfaces are also used to receive projected images. Facial images may be projected onto blank dummy heads to simulate a "talking head".

Attempts have been made to produce transparent "head-up" displays which may be viewed whilst still viewing the background. One such system comprises a headset-mounted computer monitor which utilises a linear array of light emitting diodes and a vibrating mirror to produce an image which is viewed by one eye of the observer, whilst the background is still visible by the other eye. Systems of this general kind can exhibit various shortcomings. The various contrivances required to produce the image render the finished product relatively expensive and chromatic limitations are imposed by the choice of the light emitting diode wavelengths. Furthermore, a period of accustomisation is required by the brain before such systems may properly be used.

Another example of an imaging system is that described in European Patent No. 72949B, which discloses a system in which a sign or indicator board has a light source with an output in virtually direct contact with a luminous object such as a plastics luminous pane. The light source is partly or entirelycontained within the luminous pane and the pane may contain a fluorescent dye. However, because this system has the light source contained either partly or wholly within the pane, it may not be used for remote image projection and viewing purposes.

It is thus an object of the present invention to provide an imaging system in which the aforementioned shortcomings are at least alleviated by providing an imaging system comprising an optically transparent image supporting means including fluorescent material, which supporting means is arranged to respond to an optical image projected thereon by an optical image projection means. Thus, by projecting an optical image onto a screen or the like which includes fluorescent material, the impinging light may be absorbed by the material which then fluoresces and emits light of a characteristic wavelength, or range of wavelengths, thereby producing a viewable image. This "secondary" emission wherein each molecule of fluorescent material acts as a point source of light permits the screen to be substantially omni-directional.

The polar distribution of light is very uniform and so comfortable viewing over a very wide field of view is possible.

Preferably the fluorescent material is a dye. This then permits the image supporting means to be selectively "doped" with a predetermined concentration of fluorescent material, and in predetermined positions either on or within the image supporting means.

Preferably, the image supporting means comprises plastics material. Because the image supporting means is optically transparent, hence both the projected image and the background may be viewed simultaneously and furthermore the projected image may be viewed from either side of the image supporting means.

The invention will now be described, by way of example only, with reference to the following drawings, of which;

Figure 1 shows schematically one embodiment of the present invention, and;

Figure 2 illustrates an alternative arrangement of Figure 1, and;

Figure 3 shows a schematic view of an apparatus for achieving multiple-depth image formation, and;

Figure 4 shows a schematic view of an apparatus for achieving anisotropic image formation, and;

Figure 5 illustrate a micro-pixel arrangement for achieving multiple chromatic images.

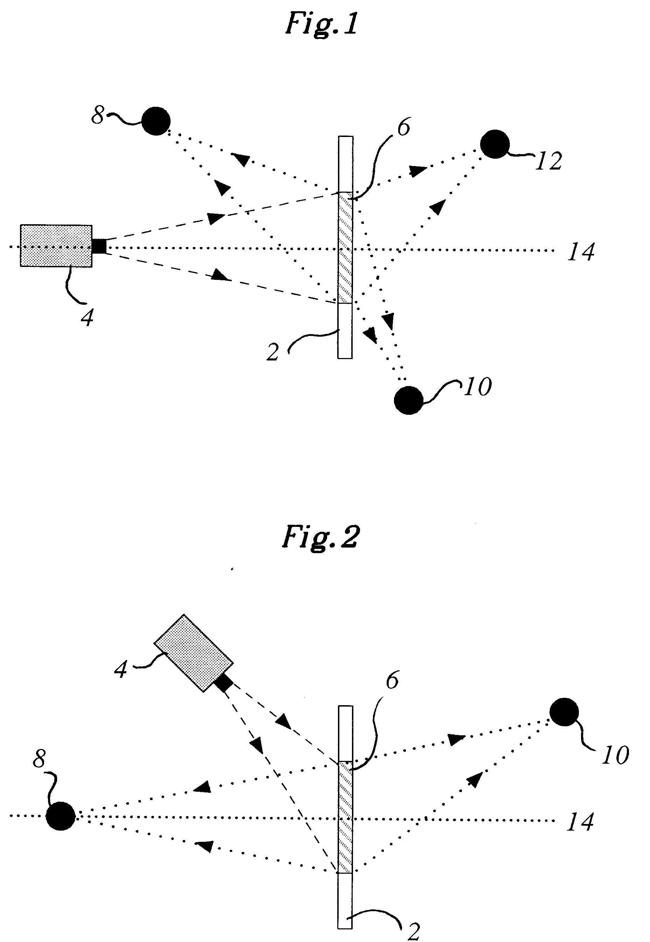

Referring firstly to Figure 1, the imaging system comprises an image supporting means 2 including fluorescent material, such as a fluorescent plastics screen. The image supporting means 2 may either contain a fluorescent dye and/or be coated with a thin layer of fluorescent material, where a wide range of thickness of coating is possible, ranging from a single molecular monolayer to several tens of microns.

A projection means 4 such as a slide projector or standard cinematic projector projects an optical image 6 onto the image supporting means.

If the light projected from the projection means 4 is chosen to have or include a wavelength shorter than a predetermined threshold value, which value is governed by the fluorescent material, then a fluorescent version of the image 6 will be generated.

The inventor has found that if the image supporting means 2 is chosen to be optically transparent or translucent then an observer 8 is able to view both the image 6 and the background of the image supporting means 2 on the side of the image supporting means 2 remote from the projection means 4. Furthermore, because each molecule of fluorescent material acts as a point source of light, the fluorescent image is substantially omni-directional and thus observers 10 and 12 may view the image 6 with clarity substantially equal to that of observer 8.

Because the re-generation (i.e. the absorbtion and subsequent re-emission) of light takes place at the molecular level within the fluorescent material, and the resolution of the image supporting means 2 is determined by its surface roughness; the spatial resolution of the image supporting means 2 may be made remarkably good simply by making its surfaces very smooth. This is easily achievable by forming the image supporting means 2 from plastics material.

In view of the foregoing, it will be understood that it is possible to orient the projection means 4 obliquely to axis 14 such that observers 8 and 10, in Figure 2, are not able to view (or are at least not troubled by) the projection means 4, yet clearly view the image 6 which is supported on screen 2.

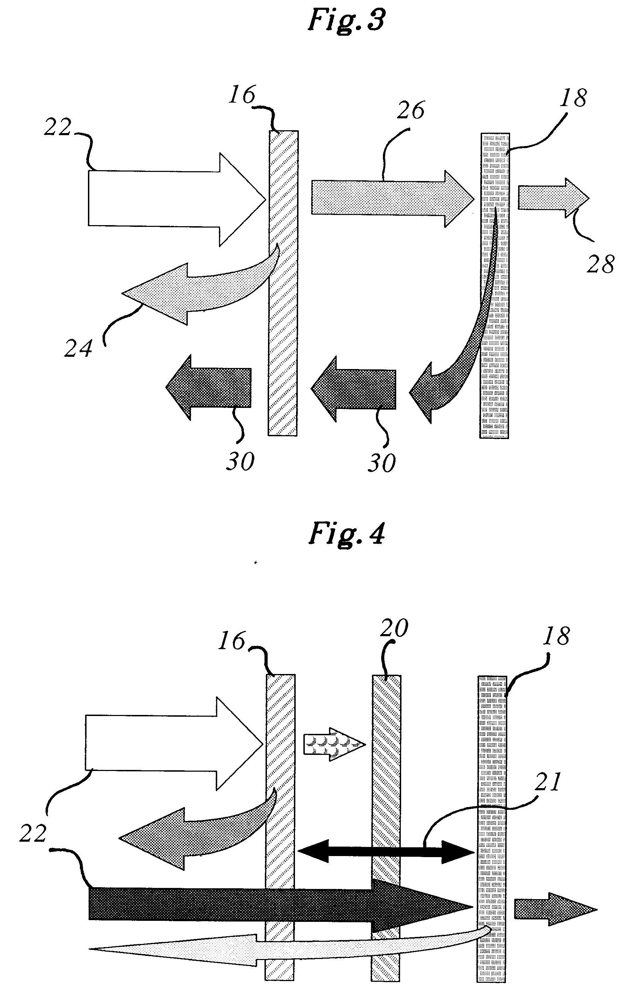

By suitable choice of the fluorescent material, it is possible to generate multiple-depth images, such as is illustrated in Figure 3. By choosing discrete image supporting means 16, 18 one of which 16 contains, for example, blue fluorescent dye, and the other of which 18 contains, for example, red fluorescent dye and between these inserting an absorber of blue light 20, the effect of multiple-depth imaging may be illustrated.

The image supporting means 16, 18 and the absorber 20 may equally well be employed in intimate contact or spaced apart 21 for visual effect. The illuminating light 22 may comprise discrete wavelengths or be polychromatic, such as white light. It can be seen that incident light 22 having suitable ultra-violet and/or blue components will cause fluorescence with image supporting means 16, and any transmitted, or re-emitted blue light is then prevented from travelling on to reach image supporting means 18 by the absorber 20. However, incident light 22 having a red component is of too long a wavelength to cause fluorescence within image supporting means 16 and so passes through as well as passing through the blue absorber 20 and then causes fluorescence within the image supporting means 18.

Hence spatially separated 21 images may be displayed by utilising colour-coded image information as the incident light 22.

The principles of the invention may be extended to the generation of anisotropic images. This is explained with reference to Figure 4, which depicts a similar arrangement to that of Figure 3, but without the absorber 20, and similar components are numbered likewise. A simplification of the understanding is achieved by neglecting conversion efficiences and any absorption/trapping effects that may occur within the image supporting means 16,18. If monochromatic light 22 having an appropriate wavelength to cause fluorescence within the image supporting means 16 is incident upon it, then 50% of the blue light emitted by fluorescence travels back 24 towards the source of the incident light 22 and 50% travels onwards 26 to reach the image support means 18. If this light, in turn, has an appropriate wavelength to cause fluorescence within the image supporting means 18, then this light 26 stimulates red emission by fluorescence within image supporting means 18, 50% of which travels onwards 28 away from the source of the incident light 22, (i.e. 25% of the initial intensity), and 50% (i.e. 25% of the initial intensity) travels back 30 through image support means 16. The light 30 does not possess a sufficiently short wavelength to generate fluorescence with image support means 16.

The result of the above is that 75% of incident light 22 is re-emitted back 24, 30 towards the source of the incident light 22.

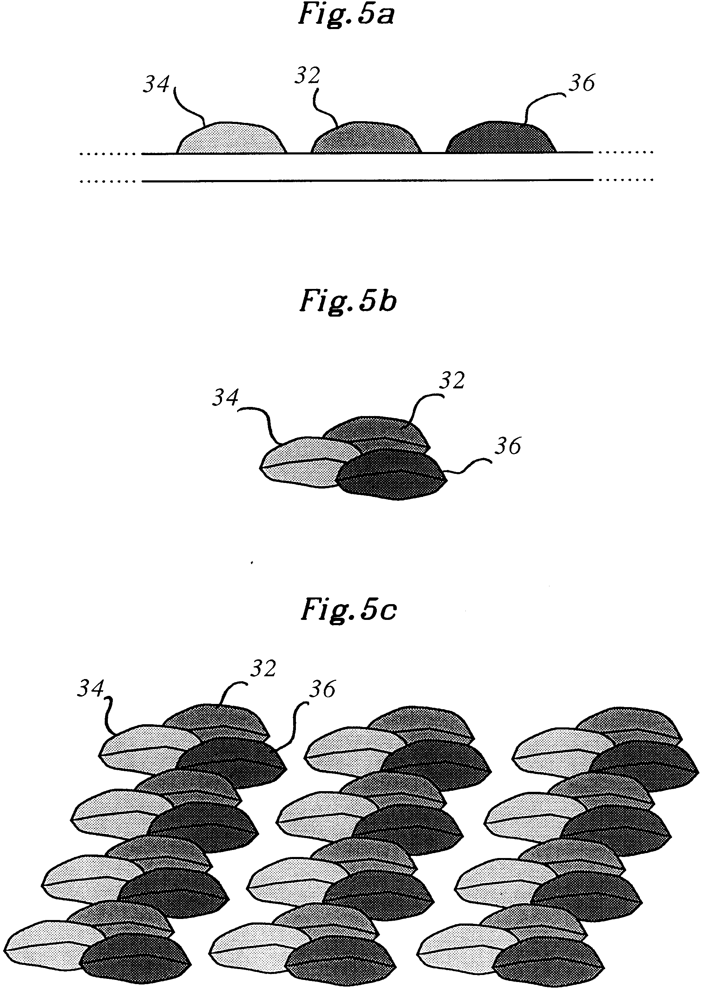

In yet a further embodiment of the present invention, detailed in Figures 5a, 5b and 5c, it has been found that combinations of red, green and blue fluorescent elements respectively 32, 34 and 36 formed relatively close together, for example, in triad groups and constructed to be on or within an image supporting means as described herebefore, allow the generation of multiple chromatic images.

Thus the present invention provides a system for imaging purposes in which an image supporting means is able to be omni-directional, viewable from both sides and optically transparent. It possesses high intrinsic definition because of the molecular-level mode of operation, and polychromatic viewing is available.

The cost of producing the image supporting means is very low as it may easily be constructed from fluorescent dye-doped plastics materials which may be injection-moulded into any precisely controlled shape or surface, such as cube-like, cylindrical or pyramidal structures, or be screen-printed onto for example, glass or other suitable substrates to form microscreens or similar miniature components.

It will be appreciated by those skilled in the art that modifications may be made to the specific embodiments described hereinbefore, whilst still remaining with the scope of the present invention. For example, the projection means may project static or dynamic images and may comprise mono- or poly-chromatic light or even coherent light such as a laser source.

The image supporting means may comprise a fluorescent dye or equally well be a substrate coated with a fluorescent dye or a thin film, such as a Langmuir-Blodgett film, of fluorescent material through which light may pass. The use of an absorbing or reflective backing to the image supporting means would allow the possibility of a "black" image supporting means.

With reference once again to Figure 1, it will be appreciated that if observer 12 were to move to a position on or near axis 14 on the side of the image supporting means 2 remote from the projector 4, then residual light from the projector 4 passing through the image supporting means 2 would be visible to the observer 12; this may be obviated by use of crossed polarising filters flanking the image supporting means 2. The fluorescent image 6 would still be visible because the light emission from the fluorescent dye would be randomly polarised.

**Claims**

1. An imaging system comprising an optically transparent image supporting means including fluorescent material, which supporting means is arranged to respond to an optical image projected thereon by an optical image projection means.

2. An imaging system according to claim 1 wherein the image supporting means comprises plastics material.

3. An imaging system according to either claim 1 or claim 2 wherein the fluorescent material is a dye.

4. An imaging system according to any one of the preceding claims wherein the optical image projection means is effective to project static and/or dynamic images.

5. An imaging system according to any one of the preceding claims wherein the image supporting means comprises a plurality of individual image supporting means each including fluorescent material possessing a respective colour characteristic.

6. An imaging system according to claim 5 wherein the optical image projection means is arranged to project an image having a plurality of colour characteristics contained therein and arranged to correspond, at least in part, to the said each respective colour characteristic.

7. An imaging system according to any one of claims 1-4 wherein the image supporting means comprises a member including fluorescent material possessing a plurality of colour characteristics.

8. An imaging system according to any one of the preceding claims wherein the optical image supporting means is a sheet of fluorescent plastics material.

9. An imaging system according to any one of the preceding claims wherein the optical image projection means is a projector.

## Fig.1

## Fig.2

*Fig.3*

*Fig.4*

## Fig.5a

## Fig.5b

## Fig.5c